# EUROPEAN PATENT APPLICATION

(11) **EP 4 826 412 A1**
(43) Date of publication of application: **21.10.2026**
(21) Application number: 24918713.9
(22) Date of filing: 19.01.2024
(51) Int. Cl.: G01S 13/58

(54) **RADAR SIGNAL PROCESSING DEVICE, RADAR SIGNAL PROCESSING METHOD, AND RADAR DEVICE**

(71) Applicant: Mitsubishi Electric Corporation, Tokyo 100-8310 (JP)
(72) Inventor: KITAMURA, Takayuki, Tokyo 100-8310 (JP); OSHIMA, Tadashi, Tokyo 100-8310 (JP)
(74) Representative: Pfenning, Meinig & Partner mbB
(86) International application number: PCT/JP2024/001361
(87) International publication number: WO 2025/154246

(57) **Abstract**

A radar signal processing device (5) includes: a reception signal acquisition unit (11) to acquire a reception signal of each of a plurality of reception antennas (3-1) to (3-N_{Rx}); a spectrum calculation unit (12) to calculate an initial value of a two-dimensional spectrum representing a direction in which a target is present and a velocity of the target on a basis of the reception signals acquired by the reception signal acquisition unit (11); and a spectrum update unit (13) to update the two-dimensional spectrum on a basis of a non-linear component included in a velocity spectrum in the two-dimensional spectrum and a positional error of the reception antennas included in an angular spectrum in the two-dimensional spectrum.

## Description

### TECHNICAL FIELD

The present disclosure relates to a radar signal processing device, a radar signal processing method, and a radar device.

### BACKGROUND ART

There are radar signal processing devices to calculate the direction in which a target is present on the basis of a reception signal of each of a plurality of reception antennas.

As such a radar signal processing device, for example, Non-Patent Literature 1 discloses a radar signal processing device capable of estimating, with high accuracy, the direction in which a target is present even in a case where there is an unknown positional error in the installation position of a reception antenna. As the technique of estimating the direction in which a target is present, the radar signal processing device uses a ReIterative Super Resolution (RISR) method.

### CITATION LIST

### NON-PATENT LITERATURES

Non-Patent Literature 1: C.C. Jones et al., "Development & Experimental Assessment of Robust Direction Finding and Self-Calibration," in Proc. IEEE Radar Conf., Mar. 2022.

### SUMMARY OF INVENTION

### TECHNICAL PROBLEM

There is a problem with the radar signal processing device disclosed in Non-Patent Literature 1 in that, although the radar signal processing device implements a technology for calculating the direction in which a target is present in a case where there is an unknown positional error in the installation position of a reception antenna, the radar signal processing device does not implement a technology for calculating the velocity of the target.

The present disclosure has been made to solve the problem, and an object thereof is to obtain a radar signal processing device capable of calculating not only the direction in which a target is present, but also the velocity of the target in a case where there is an unknown positional error in the installation position of a reception antenna.

### SOLUTION TO PROBLEM

A radar signal processing device according to the present disclosure includes: a reception signal acquisition unit to acquire a reception signal of each of a plurality of reception antennas; a spectrum calculation unit to calculate an initial value of a two-dimensional spectrum representing a direction in which a target is present and a velocity of the target on a basis of the reception signals acquired by the reception signal acquisition unit; and a spectrum update unit to update the two-dimensional spectrum on a basis of a non-linear component included in a velocity spectrum in the two-dimensional spectrum and a positional error of the reception antennas included in an angular spectrum in the two-dimensional spectrum.

### ADVANTAGEOUS EFFECTS OF INVENTION

The present disclosure enables calculation of not only the direction in which a target is present, but also the velocity of the target in a case where there is an unknown positional error in the installation position of a reception antenna.

### BRIEF DESCRIPTION OF DRAWINGS

FIG. 1 is a configuration diagram illustrating a radar device including a radar signal processing device 5 according to a first embodiment.
FIG. 2 is a hardware configuration diagram illustrating the hardware of the radar signal processing device 5 according to the first embodiment.
FIG. 3 is a hardware configuration diagram of a computer in a case where the radar signal processing device 5 is implemented by software, firmware, or the like.
FIG. 4 is an explanatory diagram illustrating the relationship between a target and a vehicle on which the radar device is installed, and a positional error Δdⱼ of a reception antenna 3-j (j = 1, ···, N_{Rx}).
FIG. 5 is an explanatory diagram illustrating a positional error Δdᵢ of a transmission antenna 2-i (i = 1, 2, 3).
FIG. 6 is an explanatory diagram illustrating the timing of a pulse output to each of the three transmission antennas 2-1 to 2-3 from a transmitter 1.
FIG. 7 is a flowchart illustrating a radar signal processing method which is a processing procedure performed by the radar signal processing device 5.
FIG. 8 is a configuration diagram illustrating a radar device including a radar signal processing device 5 according to a second embodiment.
FIG. 9 is a hardware configuration diagram illustrating the hardware of the radar signal processing device 5 according to the second embodiment.
FIG. 10 is an explanatory diagram illustrating the relationship between a target and a vehicle on which the radar device is installed, and a positional error Δdⱼ of a reception antenna 3-j (j = 1, ···, N_{Rx}).
FIG. 11 is an explanatory diagram illustrating the relationship between the target and the vehicle on which the radar device is installed, and the positional error Δdⱼ of the reception antenna 3-j (j = 1, ···, N_{Rx}).
FIG. 12 is an explanatory diagram illustrating the relationship between the target and the vehicle on which the radar device is installed, and the positional error Δdⱼ of the reception antenna 3-j (j = 1, ···, N_{Rx}).
FIG. 13 is an explanatory diagram illustrating a display example of a two-dimensional spectrum x_{m,n}hat.

### DESCRIPTION OF EMBODIMENTS

Hereinbelow, to explain the present disclosure in more detail, modes for implementing the present disclosure are explained with reference to the attached drawings.

### First Embodiment.

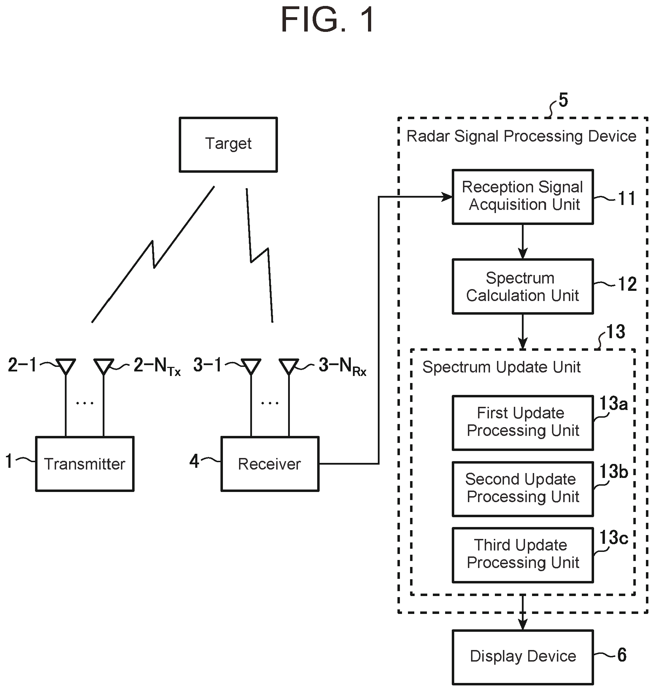

FIG. 1 is a configuration diagram illustrating a radar device including a radar signal processing device 5 according to a first embodiment.

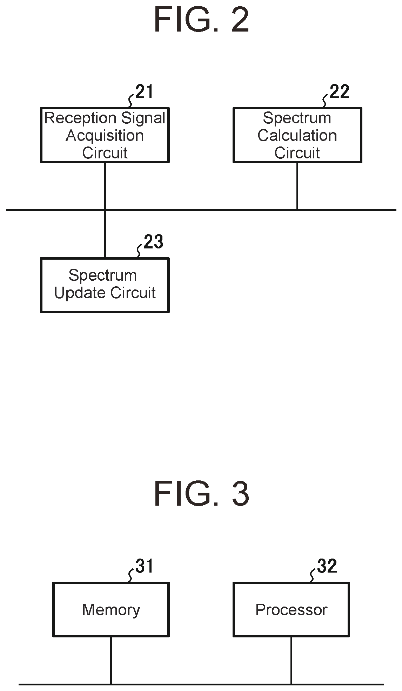

FIG. 2 is a hardware configuration diagram illustrating the hardware of the radar signal processing device 5 according to the first embodiment.

The radar device illustrated in FIG. 1 includes a transmitter 1, transmission antennas 2-1 to 2-N_{Tx}, reception antennas 3-1 to 3-N_{Rx}, a receiver 4, the radar signal processing device 5, and a display device 6. N_{Tx} is an integer equal to or greater than one, and N_{Rx} is integer equal to or greater than two.

For example, as transmission signals, the transmitter 1 outputs a pulse to each of the transmission antennas 2-1 to 2-N_{Tx}. The timings at which pulses are output from the transmitter 1 to the transmission antennas 2-1 to 2-N_{Tx} differ from one another.

For example, as a transmission signal, a transmission antenna 2-i (i = 1, ···, N_{Tx}) emits a pulse toward a target. The transmission timing of the pulses from the transmission antennas 2-1 to 2-N_{Tx} differs from one another.

A reception antenna 3-j (j = 1, ···, N_{Rx}) receives a reception signal which is a transmission signal after reflection by the target.

The reception antenna 3-j outputs the reception signal to the receiver 4.

The receiver 4 demodulates the reception signal output from the reception antenna 3-j and converts the reception signal after the demodulation, which is an analog signal, into a digital signal.

As the reception signal of the reception antenna 3-j, the receiver 4 outputs the digital signal to the radar signal processing device 5.

The radar signal processing device 5 includes a reception signal acquisition unit 11, a spectrum calculation unit 12, and a spectrum update unit 13.

The display device 6 displays a two-dimensional spectrum calculated by the radar signal processing device 5. The two-dimensional spectrum represents the direction in which the target is present and the velocity of the target.

In the radar device illustrated in FIG. 1, the radar signal processing device 5 outputs the two-dimensional spectrum to the display device 6, and the display device 6 displays the two-dimensional spectrum. However, this is merely an example. The radar signal processing device 5 may output the two-dimensional spectrum to an unillustrated tracking device, for example, and the tracking device may track the target on the basis of the two-dimensional spectrum.

For example, the reception signal acquisition unit 11 is implemented by a reception signal acquisition circuit 21 illustrated in FIG. 2.

The reception signal acquisition unit 11 acquires a reception signal of the reception antenna 3-j (j = 1, ···, N_{Rx}) from the receiver 4.

The reception signal acquisition unit 11 outputs the reception signals to the spectrum calculation unit 12.

For example, the spectrum calculation unit 12 is implemented by a spectrum calculation circuit 22 illustrated in FIG. 2.

The spectrum calculation unit 12 acquires the reception signals from the reception signal acquisition unit 11.

On the basis of the reception signals, the spectrum calculation unit 12 calculates an initial value of a two-dimensional spectrum representing the direction in which the target is present and the velocity of the target.

The target is a moving body such as a vehicle, an airplane, or an animal.

In a case where, for example, the radar device illustrated in FIG. 1 is installed on a vehicle, the velocity of the target represented by the two-dimensional spectrum is the relative velocity of the target with respect to the vehicle on which the radar device is installed.

In a case where, for example, the radar device illustrated in FIG. 1 is installed on a road structure, the velocity of the target represented by the two-dimensional spectrum is the absolute velocity of the target.

The spectrum calculation unit 12 outputs the initial value of the two-dimensional spectrum to the spectrum update unit 13.

For example, the spectrum update unit 13 is implemented by a spectrum update circuit 23 illustrated in FIG. 2.

The spectrum update unit 13 includes a first update processing unit 13a, a second update processing unit 13b, and a third update processing unit 13c.

The spectrum update unit 13 acquires the initial value of the two-dimensional spectrum from the spectrum calculation unit 12.

The spectrum update unit 13 updates the two-dimensional spectrum on the basis of non-linear components included in a velocity spectrum (hereinafter, called a "velocity spectrum") in the two-dimensional spectrum and positional errors of the reception antennas 3-1 to 3-N_{Rx} included in an angular spectrum (hereinafter called an "angular spectrum") in the two-dimensional spectrum.

After completing the two-dimensional spectrum update process, the spectrum update unit 13 outputs the two-dimensional spectrum after the updating to the display device 6, for example.

The first update processing unit 13a acquires the initial value of the two-dimensional spectrum from the spectrum calculation unit 12.

The first update processing unit 13a updates the two-dimensional spectrum on the basis of the non-linear components included in the velocity spectrum.

Specifically, the first update processing unit 13a updates the two-dimensional spectrum on the basis of a non-linear component attributable to the acceleration of the target in non-linear components included in the velocity spectrum.

In addition, the first update processing unit 13a updates the two-dimensional spectrum on the basis of a non-linear component attributable to variations in transmission intervals of pulses transmitted from the transmission antennas 2-1 to 2-N_{Tx} in the non-linear components included in the velocity spectrum.

The first update processing unit 13a outputs the two-dimensional spectrum after the updating to the second update processing unit 13b.

The second update processing unit 13b acquires the two-dimensional spectrum after the updating from the first update processing unit 13a.

The second update processing unit 13b updates the two-dimensional spectrum obtained after the updating by the first update processing unit 13a on the basis of the positional errors of the reception antennas 3-1 to 3-N_{Rx} included in the angular spectrum.

The second update processing unit 13b outputs the two-dimensional spectrum after the updating to the third update processing unit 13c.

The third update processing unit 13c acquires the two-dimensional spectrum after the updating from the second update processing unit 13b.

The third update processing unit 13c updates the two-dimensional spectrum obtained after the updating by the second update processing unit 13b on the basis of a coupling error between the non-linear components included in the velocity spectrum and the positional errors of the reception antennas 3-1 to 3-N_{Nx}.

The third update processing unit 13c outputs the two-dimensional spectrum after the updating to the display device 6, for example.

It is assumed in FIG. 1 that each of the reception signal acquisition unit 11, the spectrum calculation unit 12, and the spectrum update unit 13, which are constituent elements of the radar signal processing device 5, is implemented by dedicated hardware illustrated in FIG. 2. That is, it is assumed that the radar signal processing device 5 is implemented by the reception signal acquisition circuit 21, the spectrum calculation circuit 22, and the spectrum update circuit 23.

For example, each of the reception signal acquisition circuit 21, the spectrum calculation circuit 22, and the spectrum update circuit 23 is a single circuit, a composite circuit, a programmed processor, a parallel-programmed processor, an Application Specific Integrated Circuit (ASIC), a Field-Programmable Gate Array (FPGA), or a combination of these.

Constituent elements of the radar signal processing device 5 are not necessarily implemented by dedicated hardware, but the radar signal processing device 5 may be implemented by software, firmware, or a combination of software and firmware.

The software or the firmware is stored on a memory of a computer as programs. The computer means hardware to execute programs, and, for example, is a Central Processing Unit (CPU), a Graphics Processing Unit (GPU), a central processor, a processing device, an arithmetic operation device, a microprocessor, a microcomputer, a processor, or a Digital Signal Processor (DSP).

FIG. 3 is a hardware configuration diagram of a computer in a case where the radar signal processing device 5 is implemented by software, firmware, or the like.

In a case where the radar signal processing device 5 is implemented by software, firmware, or the like, a program for causing the computer to execute a processing procedure of each of the reception signal acquisition unit 11, the spectrum calculation unit 12, and the spectrum update unit 13 is stored on a memory 31. Then, a processor 32 of the computer executes the programs stored on the memory 31.

In addition, FIG. 2 illustrates an example in which each of the constituent elements of the radar signal processing device 5 is implemented by dedicated hardware, and FIG. 3 illustrates an example in which the radar signal processing device 5 is implemented by software, firmware, or the like. However, this is merely an example. Some constituent elements of the radar signal processing device 5 may be implemented by dedicated hardware, and the remaining constituent elements may be implemented by software, firmware, or the like.

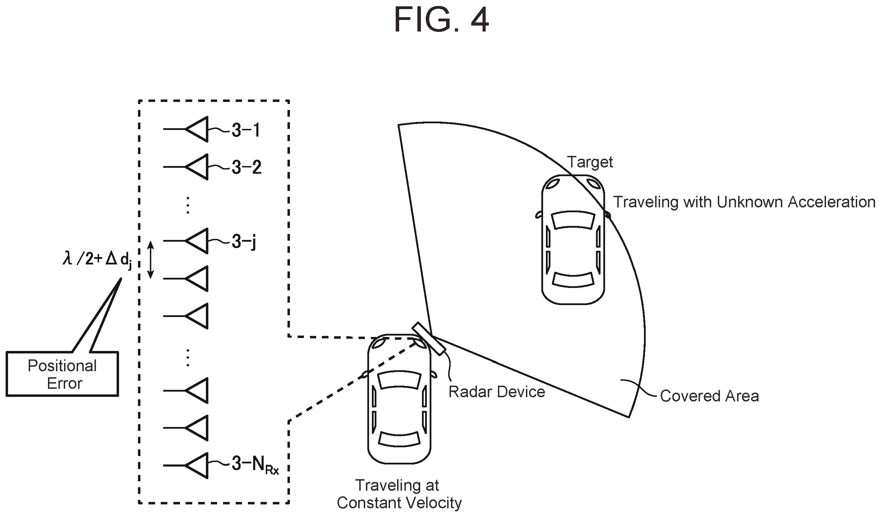

For example, as illustrated in FIG. 4, the radar device illustrated in FIG. 1 is installed near the front of a vehicle, and, for example, the target is another vehicle traveling ahead to the right of the vehicle.

In the example illustrated in FIG. 4, the N_{Rx} reception antennas 3-1 to 3-N_{Rx} are installed in a linear array at intervals of the wavelength λ/2, which is half the wavelength of a pulse which is a transmission signal. In the example illustrated in FIG. 4, the illustrations of the transmission antennas 2-1 to 2-N_{Tx} are omitted.

In the example illustrated in FIG. 4, a positional error Δdⱼ which is an error of the installation position of a reception antenna 3-j (j = 1, ···, N_{Rx}) occurs randomly in the direction in which the reception antennas 3-1 to 3-N_{Rx} are arrayed.

In addition, in the example illustrated in FIG. 4, the vehicle on which the radar device is installed is traveling at a constant velocity, and the target vehicle is traveling with an unknown acceleration.

FIG. 4 is an explanatory diagram illustrating the relationship between the target and the vehicle on which the radar device is installed, and the positional error Δdⱼ of the reception antenna 3-j.

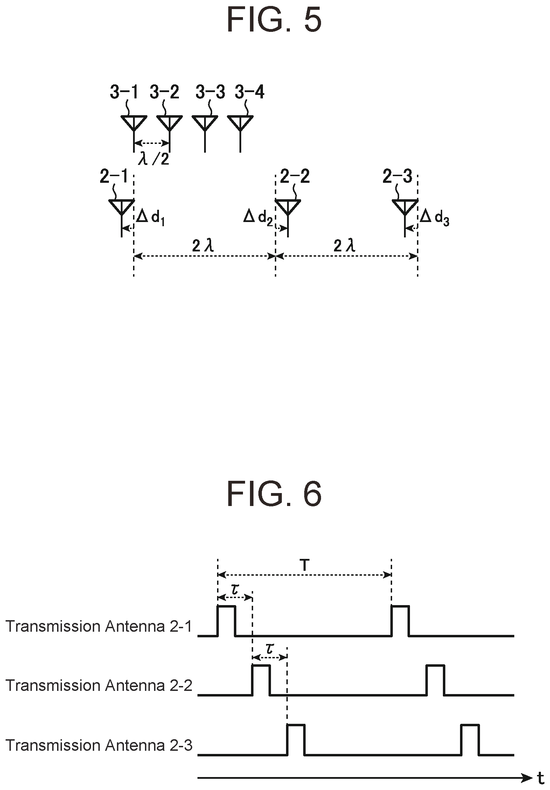

FIG. 4 illustrates an example in which the positional error Δdⱼ of the reception antenna 3-j occurs randomly. Even if the positional error Δdⱼ of the reception antenna 3-j does not occur, in a case where a positional error Δdᵢ of the transmission antenna 2-i (i = 1, ···, N_{Tx}) occurs as illustrated in FIG. 5, the situation can be handled in the same manner as in FIG. 4 as if the positional error Δdⱼ of the reception antenna 3-j has occurred.

FIG. 5 is an explanatory diagram illustrating the positional error Δdᵢ of a transmission antenna 2-i (i = 1, 2, 3).

The N_{Tx} transmission antennas 2-1 to 2-N_{Tx} are installed in a linear array at intervals of the wavelength 2λ, which is twice the wavelength of a pulse which is a transmission signal. It should be noted that, in the example illustrated in FIG. 5, the positional error Δdᵢ of the transmission antenna 2-i occurs randomly.

Next, an operation performed by the radar device illustrated in FIG. 1 is explained.

The transmitter 1 repeatedly generates a pulse as a transmission signal and outputs the pulse to each of the transmission antennas 2-1 to 2-N_{Tx}.

The pulses are output from the transmitter 1 to the transmission antennas 2-i (i = 1, ···, N_{Tx}) at intervals of time T as illustrated in FIG. 6.

FIG. 6 is an explanatory diagram illustrating the timing of a pulse output to each of the three transmission antennas 2-1 to 2-3 from the transmitter 1.

In the example illustrated in FIG. 6, the timing at which a pulse is output from the transmitter 1 to the transmission antenna 2-1 and the timing at which a pulse is output from the transmitter 1 to the transmission antenna 2-2 are offset by a time τ.

In addition, the timing at which a pulse is output from the transmitter 1 to the transmission antenna 2-2 and the timing at which a pulse is output from the transmitter 1 to the transmission antenna 2-3 are offset by the time τ.

Each transmission antenna 2-i emits, toward the target, a pulse output from the transmitter 1.

Some of the pulses emitted from the transmission antennas 2-i (i = 1, ···, N_{Tx}) are reflected by the target. Each pulse after the reflection by the target returns to the reception antenna 3-j (j = 1, ···, N_{Rx}).

The reception antenna 3-j receives the pulse after the reflection by the target and outputs a reception signal of the pulse to the receiver 4.

The receiver 4 demodulates the reception signal output from the reception antenna 3-j and converts the reception signal after the demodulation, which is an analog signal, into a digital signal.

As represented by the following Formula (1), the receiver 4 outputs a reception signal s(i,j,h), which is a digital signal, to the radar signal processing device 5.$\begin{matrix}s \left(i, j, h\right) = exp \left[\begin{matrix}- j 2 {k}_{c} \left\{{v}_{0}\left(hT+iτ\right)+0.5β{\left(hT+iτ\right)}^{2}\right\} \\ - {jk}_{c} \left\{0.5λ\left({iN}_{rx}+j\right)+{Δd}_{i}\right\} sin θ\end{matrix}\right] \\ = exp \left[-j\left\{2{k}_{c}⋅{v}_{0}⋅hT+{k}_{c}⋅βhT⋅hT\right\}\right] \\ ⋅ exp \left[-j\left\{{k}_{c}⋅sin θ⋅0.5λ\left({iN}_{rx}+j\right)+{k}_{c}⋅sin θ⋅{Δd}_{i}+{k}_{c}⋅\left(2{v}_{0}+βiτ\right)⋅iτ\right\}\right] \\ ⋅ exp \left[-{jk}_{c}⋅2β⋅hT⋅iτ\right]\end{matrix}$ (1)

In Formula (1), h is the hit number of a pulse emitted from the transmission antenna 2-i. It is assumed here that h = 0, 1, ···, H-1, for convenience of explanation. H is an integer equal to or greater than two.
i is a variable representing the transmission antenna 2-i having emitted the pulse. It is assumed here that i = 0, 1, ···, N_{TX}-1, for convenience of explanation. It should be noted that this is merely an example, and i may be 1, ···, N_{TX}.
j is a variable representing the reception antenna 3-j having received the pulse. It is assumed here that j = 0, 1, ···, N_{RX}-1, for convenience of explanation. It should be noted that this is merely an example, and j may be 1, ···, N_{RX}.
v₀ is the line-of-sight-direction initial velocity of the target, β is the line-of-sight-direction acceleration of the target, and θ is the direction in which the target is present, measured from the boresight.
k_{c} is the central frequency.

In Formula (1), k_{c}·βhT·hT is the phase disturbance term of the reception signal s(i,j,h) attributable to the line-of-sight-direction acceleration β of the target.
k_{c}·sinθ-Δdᵢ is the phase disturbance term of the reception signal s(i,j,h) attributable to the positional error Δdᵢ of the transmission antenna 2-i.
k_{c}·(2v₀+βiτ)·iτ is the phase disturbance term of the reception signal s(i,j,h) attributable to the line-of-sight-direction acceleration β of the target.
k_{c}·2β·hT·iτ is the phase disturbance term of the reception signal s(i,j,h) attributable to the line-of-sight-direction acceleration β of the target.

The four phase disturbance terms can be approximated as represented by the following Formulae (2) to (5) using errors ΔTₕ, ΔDᵢ, Δτᵢ, and Δeₕᵢ that follow mutually different Gaussian distributions. It should be noted that it is assumed that the errors ΔTₕ, ΔDᵢ, Δτᵢ, and Δeₕᵢ follow ΔTₕ ~ N(0,σ_{T}²), ΔDᵢ ~ N(0,σ_{D}²), Δτᵢ ~ N(0,σ_{τ}²), and Δeₕᵢ ~ N(0,σₑ²). ${k}_{c} ⋅ βhT ⋅ hT \approx Δ {T}_{h} {v}_{0}$ (2) ${k}_{c} ⋅ sin θ ⋅ {Δd}_{i} \approx {ΔD}_{i} sin θ$ (3) ${k}_{c} ⋅ \left(2{v}_{0}+βiτ\right) ⋅ iτ \approx Δ {τ}_{i} {v}_{0}$ (4) ${k}_{c} ⋅ 2 β ⋅ hT ⋅ iτ \approx Δ {e}_{hi}$ (5)

By substituting Formulae (2) to (5) into Formula (1), the reception signal s(i,j,h) can be approximated as represented by the following Formula (6).$\begin{matrix}s \left(i, j, h\right) \approx exp \left[-j\left\{2{k}_{c}⋅{v}_{0}⋅hT+Δ{T}_{h}{v}_{0}\right\}\right] \\ ⋅ exp \left[-j\left\{{k}_{c}⋅sinθ⋅0.5λ\left({iN}_{rx}+j\right)+{ΔD}_{i}sinθ+Δ{τ}_{i}{v}_{0}\right\}\right] \\ ⋅ exp \left[-jΔ{e}_{hi}\right]\end{matrix}$ (6)

Assuming that dynamic error components of the reception antenna 3-j are negligible in two-dimensional ReIterative Super Resolution (RISR) including a plurality of error models, the two-dimensional RISR can be modeled as in the following Formulae (7) to (16).$y = \overline{A} x + n$ (7) ${A}^{˜} = A ⊙ {Q}^{\left(1\right)} ⊙ {Q}^{\left(2\right)} ⊙ {Q}^{\left(3\right)}$ (8) $A = \left[{a}_{0,0}, {a}_{0,1}, ⋯, {a}_{{M}_{a} - 1 , {N}_{ν} - 1}\right]$ (9)

In Formulae (7) to (9), ⊙ is a mathematical symbol representing the Hadamard operation, which performs element-wise multiplication.

The boldface y ∈ C^{NRx×1} is a reception signal vector (s(i,0,h), ···, s(i,N_{Rx-}1,h)) of an array antenna having the N_{Rx} reception antennas 3-j (j = 0, 1, ···, N_{RX}-1).

The boldface A ∈ C^{Nv×Ma} is an array manifold matrix in which a steering vector a_{m,n} corresponding to Ma (Ma is an integer equal to or greater than two) angular grid points are arrayed in the column direction. The steering vector a_{m,n} represents the amplitude ratio or phase difference between the reception antennas 3-1 to 3-N_{Rx} in a certain direction, and is a known value regarding the radar signal processing device 5.

The boldface x = [x_{1,1},···,x_{m,n},···,x_{Ma,Nv}] is a signal amplitude vector representing the signal amplitude of a grid point whose angular grid index is m (m = 1, ···, Mₐ) and whose velocity grid index is n (n = 1, ···, Nᵥ). The boldface n is a complex noise vector.

Q⁽¹⁾ E C^{Nv×Ma} is a static array error matrix in which steering vector errors attributable to the acceleration of the target are arrayed.

Q⁽²⁾ ∈ C^{Nv×Ma} is a static array error matrix in which steering vector errors attributable to the positional error Δdⱼ of the reception antenna 3-j are arrayed.

Q⁽³⁾ ∈ C^{Nv×Ma} is a static array error matrix in which steering vector errors attributable to the coupling error are arrayed.

Mₐ is the number of angular grid points in the two-dimensional spectrum including the angular spectrum representing the direction in which the target is present and the velocity spectrum representing the velocity of the target, and Nᵥ is the number of velocity grid points in the two-dimensional spectrum. ${Q}^{\left(1\right)} = \left[{q}_{0,0}^{\left(1\right)}, {q}_{0,1}^{\left(1\right)}, ⋯, {q}_{{M}_{a} - 1 , {N}_{v} - 1}^{\left(1\right)}\right]$ (10) ${Q}^{\left(2\right)} = \left[{q}_{0,0}^{\left(2\right)}, {q}_{0,1}^{\left(2\right)}, ⋯, {q}_{{M}_{a} - 1 , {N}_{v} - 1}^{\left(2\right)}\right]$ (11) ${Q}^{\left(2\right)} = \left[{q}_{0,0}^{\left(3\right)}, {q}_{0,1}^{\left(3\right)}, ⋯, {q}_{{M}_{a} - 1 , {N}_{v} - 1}^{\left(3\right)}\right]$ (12) $\begin{matrix}{a}_{m , n} = \left[\begin{matrix}{e}^{- {jk}_{c} ⋅ sin {θ}_{m} ⋅ 0.5 λ \left(0{N}_{rx}+0\right)} ⋅ {e}^{- j 2 {k}_{c} ⋅ {v}_{n} ⋅ 0 T} \\ {e}^{- {jk}_{c} ⋅ sin {θ}_{m} ⋅ 0.5 λ \left(0{N}_{rx}+0\right)} ⋅ {e}^{- j 2 {k}_{c} ⋅ {v}_{n} ⋅ 1 T} \\ ⋮ \\ {e}^{- {jk}_{c} ⋅ sin {θ}_{m} ⋅ 0.5 λ \left(0{N}_{rx}+0\right)} ⋅ {e}^{- j 2 {k}_{c} ⋅ {v}_{n} ⋅ \left(H-1\right) T} \\ {e}^{- {jk}_{c} ⋅ sin {θ}_{m} ⋅ 0.5 λ \left(0{N}_{rx}+1\right)} ⋅ {e}^{- j 2 {k}_{c} ⋅ {v}_{n} ⋅ 0 T} \\ ⋮ \\ {e}^{- {jk}_{c} ⋅ sin {θ}_{m} ⋅ 0.5 λ \left(0{N}_{rx}+1\right)} ⋅ {e}^{- j 2 {k}_{c} ⋅ {v}_{n} ⋅ \left(H-1\right) T} \\ {e}^{- {jk}_{c} ⋅ sin {θ}_{m} ⋅ 0.5 λ \left(0{N}_{rx}+2\right)} ⋅ {e}^{- j 2 {k}_{c} ⋅ {v}_{n} ⋅ 0 T} \\ ⋮ \\ {e}^{- {jk}_{c} ⋅ sin {θ}_{m} ⋅ 0.5 λ \left({N}_{Tx}{N}_{rx}-1\right)} ⋅ {e}^{- j 2 {k}_{c} ⋅ {v}_{n} ⋅ \left(H-1\right) T}\end{matrix}\right] \\ = : {a}_{{N}_{Tx} \times 1} \left({θ}_{m}\right) ⊗ {a}_{{N}_{Rx} \times 1} \left({θ}_{m}\right) ⊗ {a}_{H \times 1} \left({v}_{n}\right)\end{matrix}$ (13) ${q}_{m , n}^{\left(1\right)} = \left[\begin{matrix}{e}^{- j Δ {T}_{0} {v}_{n}} \\ {e}^{- j Δ {T}_{1} {v}_{n}} \\ ⋮ \\ {e}^{- j Δ {T}_{H - 1} {v}_{n}} \\ {e}^{- j Δ {T}_{0} {v}_{n}} \\ ⋮ \\ {e}^{- j Δ {T}_{H - 1} {v}_{n}}\end{matrix}\right] = : {1}_{{N}_{Tx} {N}_{Rx} \times 1} ⊗ {e}_{H \times 1}^{\left(1\right)} \left({v}_{n}; {σ}_{T}^{2}\right)$ (14) ${q}_{m , n}^{\left(2\right)} = \left[\begin{matrix}{e}^{- {jΔD}_{0} sin {θ}_{m}} ⋅ {e}^{- j Δ {τ}_{0} {v}_{n}} \\ {e}^{- {jΔD}_{0} sin {θ}_{m}} ⋅ {e}^{- j Δ {τ}_{0} {v}_{n}} \\ ⋮ \\ {e}^{- {jΔD}_{0} sin {θ}_{m}} ⋅ {e}^{- j Δ {τ}_{0} {v}_{n}} \\ {e}^{- {jΔD}_{1} sin {θ}_{m}} ⋅ {e}^{- j Δ {τ}_{1} {v}_{n}} \\ ⋮ \\ {e}^{- {jΔD}_{1} sin {θ}_{m}} ⋅ {e}^{- j Δ {τ}_{1} {v}_{n}} \\ {e}^{- {jΔD}_{2} sin {θ}_{m}} ⋅ {e}^{- j Δ {τ}_{2} {v}_{n}} \\ ⋮ \\ {e}^{- {jΔD}_{{N}_{tx} - 1} sin {θ}_{m}} ⋅ {e}^{- j Δ {τ}_{{N}_{tx} - 1} {v}_{n}}\end{matrix}\right] = : {e}_{{N}_{Tx} \times 1}^{\left(2\right)} \left({θ}_{m}, {v}_{n};{σ}_{D}^{2},{σ}_{τ}^{2}\right) ⊗ {1}_{{N}_{Rx} H \times 1}$ (15) ${q}_{m , n}^{\left(3\right)} = \left[\begin{matrix}{e}^{- j Δ {e}_{0 , 0}} \\ {e}^{- j Δ {e}_{1 , 0}} \\ ⋮ \\ {e}^{- j Δ {e}_{H - 1 , 0}} \\ {e}^{- j Δ {e}_{0 , 0}} \\ ⋮ \\ {e}^{- j Δ {e}_{H - 1 , 0}} \\ {e}^{- j Δ {e}_{0 , 1}} \\ ⋮ \\ {e}^{- j Δ {e}_{H - 1 , {N}_{Tx} - 1}}\end{matrix}\right] = : {e}_{{N}_{Tx} \times 1}^{\left(3\right)} \left({σ}_{e}^{2}\right) ⊗ {1}_{{N}_{Rx} \times 1} ⊗ {e}_{H \times 1}^{\left(3\right)} \left({σ}_{e}^{2}\right)$ (16)

In Formulae (13) to (16), ⊗ is a mathematical symbol representing the Kronecker product, and 1_{κ×1} is a K×1 vector whose elements are all 1.

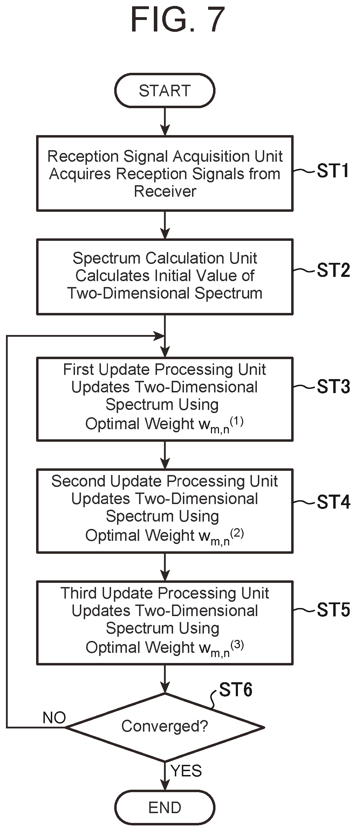

FIG. 7 is a flowchart illustrating a radar signal processing method which is a processing procedure performed by the radar signal processing device 5.

The reception signal acquisition unit 11 of the radar signal processing device 5 acquires a reception signal s(i,j,h) of a reception antenna 3-j (j = 0, ···, N_{Rx}-1) from the receiver 4 (Step ST1 in FIG. 7). Whereas the reference signs 3-1 to 3-N_{Rx} are given to the N_{Rx} reception antennas in FIG. 1, it is assumed here that j = 0, ···, N_{Rx}-1 for convenience of explanation.

The reception signal acquisition unit 11 outputs the reception signals s(i,j,h) to the spectrum calculation unit 12.

The spectrum calculation unit 12 acquires the reception signals s(i,j,h) from the reception signal acquisition unit 11.

On the basis of the reception signals s(i,j,h), the spectrum calculation unit 12 calculates an initial value of the two-dimensional spectrum x_{m,n}hat representing the direction in which the target is present and the velocity of the target (Step ST2 in FIG. 7). Due to constraints related to electronic filing, it is not possible to place a symbol "^" over the character "x_{m,n}" in the text of the specification. Accordingly, it is represented as "x_{m,n}hat."

Specifically, as represented by the following Formula (17), the spectrum calculation unit 12 calculates the initial value of the two-dimensional spectrum x_{m,n}hat using the reception signal vectors y = (s(i,0,h), ···, s(i,N_{Rx}-1,h)) of the array antenna and the steering vector a_{m,n} represented by Formula (13).

The spectrum calculation unit 12 outputs the initial value of the two-dimensional spectrum x_{m,n}hat to the spectrum update unit 13.$\hat{{x}_{m , n}} = {\left({a}_{m , n}^{H}{a}_{m , n}\right)}^{- 1} {a}_{m , n}^{H} y$ (17)

The spectrum update unit 13 acquires the initial value of the two-dimensional spectrum x_{m,n}hat from the spectrum calculation unit 12.

The spectrum update unit 13 updates the two-dimensional spectrum x_{m,n}hat on the basis of non-linear components included in a velocity spectrum in the two-dimensional spectrum and positional errors of the reception antennas 3-1 to 3-N_{Rx} included in an angular spectrum in the two-dimensional spectrum.

After completing the process of updating the two-dimensional spectrum x_{m,n}hat, the spectrum update unit 13 outputs the two-dimensional spectrum x_{m,n}hat after the updating to the display device 6, for example.

Hereinbelow, the process of updating the two-dimensional spectrum x_{m,n}hat performed by the spectrum update unit 13 is explained specifically.

First, the first update processing unit 13a of the spectrum update unit 13 calculates an expected value E[q_{m,n}⁽¹⁾q_{m,n}^{(1)H}] of the error covariance matrix in the two-dimensional RISR according to either the following Formula (18) or Formula (19). m = 1, ···, Mₐ, and n = 1, ···, Nᵥ.$\begin{matrix}E \left⌈{q}_{m , n}^{\left(1\right)}{{q}_{m , n}^{\left(1\right)}}^{H}\right⌉ \approx {g}_{m , n}^{\left(1\right)} {1}_{{N}_{Tx} {N}_{Rx} H \times {N}_{Tx} {N}_{Rx} H} \left({g}_{m , n}^{\left(1\right)}:={e}^{- {σ}_{T}^{2} {v}_{n}^{2}}\right) \\ = \left(\sqrt{{g}_{m , n}^{\left(1\right)}}{1}_{{N}_{Tx} {N}_{Rx} H \times 1}\right) {\left(\sqrt{{g}_{m , n}^{\left(1\right)}}{1}_{{N}_{Tx} {N}_{Rx} H \times 1}\right)}^{T}\end{matrix}$ (18) $E \left[{q}_{m , n}^{\left(1\right)}{{q}_{m , n}^{\left(1\right)}}^{H}\right] = {1}_{{N}_{Tx} {N}_{Rx} \times {N}_{Tx} {N}_{Rx}} ⊗ \left({g}_{m , n}^{\left(1\right)}{1}_{H \times H}+\left(1-{g}_{m , n}^{\left(1\right)}\right){I}_{H}\right)$ (19)

In Formulae (18) to (19), 1_{K×L} is a K×L matrix whose elements are all 1, and I_{K} is a K×K identity matrix.

The second update processing unit 13b of the spectrum update unit 13 calculates an expected value E[q_{m,n}⁽²⁾q_{m,n}^{(2)H}] of the error covariance matrix in the two-dimensional RISR according to either the following Formula (20) or Formula (21). $\begin{matrix}E \left[{q}_{m , n}^{\left(2\right)}{{q}_{m , n}^{\left(2\right)}}^{H}\right] \approx {g}_{m , n}^{\left(2\right)} {1}_{{N}_{Tx} {N}_{Rx} H \times {N}_{Tx} {N}_{Rx} H} \left({g}_{m , n}^{\left(2\right)}:={e}^{- \left({σ}_{D}^{2}{sin}^{2}{θ}_{m}+{σ}_{τ}^{2}{v}_{n}^{2}\right)}\right) \\ = \left(\sqrt{{g}_{m , n}^{\left(2\right)}}{1}_{{N}_{Tx} {N}_{Rx} H \times 1}\right) {\left(\sqrt{{g}_{m , n}^{\left(2\right)}}{1}_{{N}_{Tx} {N}_{Rx} H \times 1}\right)}^{T}\end{matrix}$ (20) $E \left[{q}_{m , n}^{\left(2\right)}{{q}_{m , n}^{\left(2\right)}}^{H}\right] = {I}_{{N}_{Tx}} ⊗ {1}_{{N}_{Rx} H \times {N}_{Rx} H} + {g}_{m , n}^{\left(2\right)} \left({1}_{{N}_{Tx} {N}_{Rx} H \times {N}_{Tx} {N}_{Rx} H}-{I}_{{N}_{Tx}}⊗{1}_{{N}_{Rx} H \times {N}_{Rx} H}\right)$ (21)

The third update processing unit 13c of the first update processing unit 13a calculates an expected value E[q_{m.n}⁽³⁾q_{m.n}^{(3)H}] of the error covariance matrix in the two-dimensional RISR according to either the following Formula (22) or Formula (23).$\begin{matrix}E \left[{q}_{m , n}^{\left(3\right)}{{q}_{m , n}^{\left(3\right)}}^{H}\right] \approx {g}_{m , n}^{\left(3\right)} {1}_{{N}_{Tx} {N}_{Rx} H \times {N}_{Tx} {N}_{Rx} H} \left({g}_{m , n}^{\left(3\right)}:={e}^{- {σ}_{e}^{2}}\right) \\ = \left(\sqrt{{g}_{m , n}^{\left(3\right)}}{1}_{{N}_{Tx} {N}_{Rx} H \times 1}\right) {\left(\sqrt{{g}_{m , n}^{\left(3\right)}}{1}_{{N}_{Tx} {N}_{Rx} H \times 1}\right)}^{T}\end{matrix}$ (22) $E \left[{q}_{m , n}^{\left(3\right)}{{q}_{m , n}^{\left(3\right)}}^{H}\right] \approx {I}_{{N}_{Tx} {N}_{Rx} H} + {g}_{m , n}^{\left(3\right)} \left({1}_{{N}_{Tx} {N}_{Rx} H \times {N}_{Tx} {N}_{Rx} H}-{I}_{{N}_{Tx} {N}_{Rx} H}\right)$ (23)

Next, as represented by the following Formulae (24) to (28), the first update processing unit 13a calculates an approximate analytical solution E[yx_{m,n}*] and an approximate analytical solution E[yy^{H}] in a case where only an error component of the array error matrix Q⁽¹⁾ is included in the RISR model, using an approximate analytical solution of the expected value E[q_{m,n}⁽¹⁾q_{m,n}^{(1)H}] of the error covariance matrix.

Specifically, the first update processing unit 13a calculates the approximate analytical solution E[yx_{m,n}*] by substituting, as p_{m,n}, the initial value of the two-dimensional spectrum x_{m,n}hat calculated by the spectrum calculation unit 12 into Formula (24).

In addition, the first update processing unit 13a calculates a correlation matrix Rₓₓ by substituting, as p_{m,n}, the initial value of the two-dimensional spectrum x_{m,n}hat into Formula (27).

Then, the first update processing unit 13a calculates the approximate analytical solution E[yy^{H}] by substituting the correlation matrix Rₓₓ into Formula (25).$E \left[y{x}_{m , n}^{∗}\right] = \sqrt{{g}_{m , n}^{\left(1\right)}} {p}_{m , n} {a}_{m , n}$ (24) $\begin{matrix}E \left[y{y}^{H}\right] \approx \left({AR}_{xx}{A}^{II}\right) ⊙ \left({1}_{{N}_{Tx} {N}_{Rx} \times {N}_{Tx} {N}_{Rx}}⊗{I}_{H}\right) \\ + \left({AG}^{\left(1\right)}{R}_{xx}{A}^{H}\right) ⊙ \left({1}_{{N}_{Tx} {N}_{Rx} H \times {N}_{Tx} {N}_{Rx} H}-{1}_{{N}_{Tx} {N}_{Rx} \times {N}_{Tx} {N}_{Rx}}⊗{I}_{H}\right) + {σ}_{n}^{2} I\end{matrix}$ (25) ${p}_{m , n} : = E \left[{x}_{m , n}{x}_{m , n}^{∗}\right]$ (26) ${R}_{xx} : = E \left[x{x}^{H}\right] = diag \left({p}_{0 , 0}, {p}_{0 , 1}, ⋯, {p}_{{M}_{a} - 1 , {N}_{v} - 1}\right) ∈ {R}^{{M}_{a} {N}_{v} \times {M}_{a} {N}_{v}}$ (27) ${G}^{\left(1\right)} : = diag \left({g}_{0 , 0}^{\left(1\right)}, {g}_{0 , 1}^{\left(1\right)}, ⋯, {g}_{{M}_{a} - 1 , {N}_{v} - 1}^{\left(1\right)}\right) ∈ {R}^{{M}_{a} {N}_{v} \times {M}_{a} {N}_{v}}$ (28)

As represented by the following Formulae (29) to (31), the second update processing unit 13b calculates the approximate analytical solution E[yx_{m,n}*] and the approximate analytical solution E[yy^{H}] in a case where only an error component of the array error matrix Q⁽²⁾ is included in the RISR model, using an approximate analytical solution of the expected value E[qₘ,ₙ⁽²⁾q_{m,n}^{(2)H}] of the error covariance matrix.

Specifically, the second update processing unit 13b calculates the approximate analytical solution E[yx_{m,n}*] by substituting, as p_{m,n}, the initial value of the two-dimensional spectrum x_{m,n}hat calculated by the spectrum calculation unit 12 into Formula (29).

In addition, the second update processing unit 13b calculates the approximate analytical solution E[yy^{H}] by substituting the correlation matrix Rₓₓ calculated by the first update processing unit 13a into Formula (30).$E \left[y{x}_{m , n}^{∗}\right] = \sqrt{{g}_{m , n}^{\left(2\right)}} {p}_{m , n} {a}_{m , n}$ (29) $\begin{matrix}E \left[y{y}^{H}\right] \approx \left({AR}_{xx}{A}^{H}\right) ⊙ \left({1}_{{N}_{Tx} \times {N}_{Tx}}⊗{I}_{{N}_{Rx} II \times {N}_{Rx} II}\right) \\ + \left({AG}^{\left(2\right)}{R}_{xx}{A}^{H}\right) ⊙ \left({1}_{{N}_{Tx} {N}_{Rx} H \times {N}_{Tx} {N}_{Rx} H}-{1}_{{N}_{Tx} \times {N}_{Tx}}⊗{I}_{{N}_{Rx} H \times {N}_{Rx} H}\right) + {σ}_{n}^{2} I\end{matrix}$ (30) ${G}^{\left(2\right)} : = diag \left({g}_{0 , 0}^{\left(2\right)}, {g}_{0 , 1}^{\left(2\right)}, ⋯, {g}_{{M}_{a} - 1 , {N}_{v} - 1}^{\left(2\right)}\right) ∈ {R}^{{M}_{a} {N}_{v} \times {M}_{a} {N}_{v}}$ (31)

As represented by the following Formulae (32) to (34), the third update processing unit 13c calculates the approximate analytical solution E[yx_{m,n}*] and the approximate analytical solution E[yy^{H}] in a case where only an error component of the array error matrix Q⁽³⁾ is included in the RISR model, using an approximate analytical solution of the expected value E[q_{m,n}⁽³⁾q_{m,n}^{(3)H}] of the error covariance matrix.

Specifically, the third update processing unit 13c calculates the approximate analytical solution E[yx_{m,n}*] by substituting, as p_{m,n}, the initial value of the two-dimensional spectrum x_{m,n}hat calculated by the spectrum calculation unit 12 into Formula (32).

In addition, the third update processing unit 13c calculates the approximate analytical solution E[yy^{H}] by substituting the correlation matrix Rₓₓ calculated by the first update processing unit 13a into Formula (33).$E \left[y{x}_{m , n}^{∗}\right] = \sqrt{{g}_{m , n}^{\left(3\right)}} {p}_{m , n} {a}_{m , n}$ (32) $E \left[y{y}^{H}\right] \approx \left({AR}_{xx}{A}^{H}\right) ⊙ {I}_{{N}_{Tx} {N}_{Rx} H} + \left({AG}^{\left(3\right)}{R}_{xx}{A}^{H}\right) ⊙ \left({1}_{{N}_{Tx} {N}_{Rx} H \times {N}_{Tx} {N}_{Rx} H}-{I}_{{N}_{Tx} {N}_{Rx} H}\right) + {σ}_{n}^{2} I$ (33) ${G}^{\left(3\right)} : = {g}_{m , n}^{\left(3\right)} {I}_{{M}_{a} {N}_{v}} ∈ {R}^{{M}_{a} {N}_{v} \times {M}_{a} {N}_{v}}$ (34)

Here, by comparing the approximate analytical solution E[yy^{H}] represented by Formula (25), the approximate analytical solution E[yy^{H}] represented by Formula (30), and the approximate analytical solution E[yy^{H}] represented by Formula (33), it can be seen that the structures of the block matrices are mutually different. Since the structures of the block matrices are mutually different, it is not easy to calculate optimal weights w_{m,n}⁽¹⁾hat, w_{m,n}⁽²⁾hat, and w_{m,n}⁽³⁾hat of the RISR in a case where all of the error component of the array error matrix Q⁽¹⁾, the error component of the array error matrix Q⁽²⁾, and the error component of the array error matrix Q⁽³⁾ are included in the RISR model.

In view of this, the first update processing unit 13a calculates the optimal weight w_{m,n}⁽¹⁾hat of the RISR by including the error component of the array error matrix Q⁽¹⁾ in the RISR model as represented by the following Formulae (35) to (36).

Specifically, in a case where the calculation of the optimal weight w_{m,n}⁽¹⁾hat by the first update processing unit 13a is the first calculation, the first update processing unit 13a calculates the optimal weight w_{m,n}⁽¹⁾hat by substituting the calculated correlation matrix Rₓₓ into Formula (36).

In a case where the calculation of the optimal weight w_{m,n}⁽¹⁾hat by the first update processing unit 13a is the second or subsequent calculation, the first update processing unit 13a calculates the correlation matrix Rₓₓ by substituting, as p_{m,n}, the two-dimensional spectrum x_{m,n}hat last updated by the third update processing unit 13c into Formula (27) at Step ST5 mentioned later. The updating of the two-dimensional spectrum x_{m,n}hat by the third update processing unit 13c is mentioned later.

The first update processing unit 13a calculates the optimal weight w_{m,n}⁽¹⁾hat by substituting the calculated correlation matrix Rₓₓ into Formula (36).

As represented by the following Formula (37), using the optimal weight w_{m,n}⁽¹⁾hat, the first update processing unit 13a updates the two-dimensional spectrum x_{m,n}hat (Step ST3 in FIG. 7).$\hat{{w}_{m , n}^{\left(1\right)}} = {\left(\frac{1}{{a}_{m , n}^{H} {R}^{{\left(1\right)}^{- 1}} {a}_{m , n}}\right)}^{α} {\left(\sqrt{{g}_{m , n}^{\left(1\right)}}{p}_{m , n}\right)}^{1 - α} {R}^{{\left(1\right)}^{- 1}} {a}_{m , n}$ (35) $\begin{matrix}{R}^{\left(1\right)} = \left({AR}_{xx}{A}^{H}\right) ⊙ \left({1}_{{N}_{Tx} {N}_{Rx} \times {N}_{Tx} {N}_{Rx}}⊗{I}_{H}\right) \\ + \left({AG}^{\left(1\right)}{R}_{xx}{A}^{H}\right) ⊙ \left({1}_{{N}_{Tx} {N}_{Rx} H \times {N}_{Tx} {N}_{Rx} H}-{1}_{{N}_{Tx} {N}_{Rx} \times {N}_{Tx} {N}_{Rx}}⊗{I}_{H}\right) + {σ}_{n}^{2} I\end{matrix}$ (36) $\hat{{x}_{m , n}} = {\hat{{w}_{m , n}^{\left(1\right)}}}^{H} y$ (37)

In Formula (35), α is a partial constraint coefficient that takes a value from 0 to 1.

Next, the second update processing unit 13b calculates the optimal weight w_{m,n}⁽²⁾hat of the RISR by including the error component of the array error matrix Q⁽²⁾ in the RISR model as represented by the following Formulae (38) to (39).

Specifically, the second update processing unit 13b calculates the correlation matrix Rₓₓ by substituting, as p_{m,n}, the two-dimensional spectrum x_{m,n}hat obtained after the updating by the first update processing unit 13a into Formula (27).

The second update processing unit 13b calculates the optimal weight w_{m,n}⁽²⁾hat by substituting the calculated correlation matrix Rₓₓ into Formula (39).

As represented by the following Formula (40), using the optimal weight w_{m,n}⁽²⁾hat, the second update processing unit 13b further updates the two-dimensional spectrum x_{m,n}hat obtained after the updating by the first update processing unit 13a (Step ST4 in FIG. 7).$\hat{{w}_{m , n}^{\left(2\right)}} = {\left(\frac{1}{{a}_{m , n}^{H} {R}^{{\left(2\right)}^{- 1}} {a}_{m , n}}\right)}^{α} {\left(\sqrt{{g}_{m , n}^{\left(2\right)}}{p}_{m , n}\right)}^{1 - α} {R}^{{\left(2\right)}^{- 1}} {a}_{m , n}$ (38) $\begin{matrix}{R}^{\left(2\right)} = \left({AR}_{xx}{A}^{H}\right) ⊙ \left({1}_{{N}_{Tx} \times {N}_{Tx}}⊗{I}_{{N}_{Rx} H \times {N}_{Rx} H}\right) \\ + \left({AG}^{\left(2\right)}{R}_{xx}{A}^{H}\right) ⊙ \left({1}_{{N}_{Tx} {N}_{Rx} H \times {N}_{Tx} {N}_{Rx} H}-{1}_{{N}_{Tx} \times {N}_{Tx}}⊗{I}_{{N}_{Rx} H \times {N}_{Rx} H}\right) + {σ}_{n}^{2} I\end{matrix}$ (39) $\hat{{x}_{m , n}} = {\hat{{w}_{m , n}^{\left(2\right)}}}^{H} y$ (40)

Next, the third update processing unit 13c calculates the optimal weight w_{m,n}⁽³⁾hat of the RISR by including the error component of the array error matrix Q⁽³⁾ in the RISR model as represented by the following Formulae (41) to (42).

Specifically, the third update processing unit 13c calculates the correlation matrix Rₓₓ by substituting, as p_{m,n}, the two-dimensional spectrum x_{m,n}hat obtained after the updating by the second update processing unit 13b into Formula (27).

The third update processing unit 13c calculates the optimal weight w_{m,n}⁽³⁾hat by substituting the calculated correlation matrix Rₓₓ into Formula (42).

As represented by the following Formula (43), using the optimal weight w_{m,n}⁽³⁾hat, the third update processing unit 13c further updates the two-dimensional spectrum x_{m,n}hat obtained after the updating by the second update processing unit 13b (Step ST5 in FIG. 7).$\hat{{w}_{m , n}^{\left(3\right)}} = {\left(\frac{1}{{a}_{m , n}^{H} {R}^{{\left(3\right)}^{- 1}} {a}_{m , n}}\right)}^{α} {\left(\sqrt{{g}_{m , n}^{\left(3\right)}}{p}_{m , n}\right)}^{1 - α} {R}^{{\left(3\right)}^{- 1}} {a}_{m , n}$ (41) ${R}^{\left(3\right)} = \left({AR}_{xx}{A}^{H}\right) ⊙ {I}_{{N}_{Tx} {N}_{Rx} H} + \left({AG}^{\left(3\right)}{R}_{xx}{A}^{H}\right) ⊙ \left({1}_{{N}_{Tx} {N}_{Rx} H \times {N}_{Tx} {N}_{Rx} H}-{I}_{{N}_{Tx} {N}_{Rx} H}\right) + {σ}_{n}^{2} I$ (42) $\hat{{x}_{m , n}} = {\hat{{w}_{m , n}^{\left(3\right)}}}^{H} y$ (43)

If the two-dimensional spectrum x_{m,n}hat obtained after the updating by the third update processing unit 13c has not converged (in the case of Step ST6: NO in FIG. 7), the spectrum update unit 13 repeatedly performs the processes of updating at Steps ST3 to ST5. Every time the processes of updating at Steps ST3 to ST5 are repeated, the accuracy of the two-dimensional spectrum x_{m,n}hat is enhanced.

If the two-dimensional spectrum x_{m,n}hat has converged (in the case of Step ST6: YES in FIG. 7), the spectrum update unit 13 outputs the two-dimensional spectrum x_{m,n}hat obtained after the updating by the third update processing unit 13c to the display device 6, for example.

The condition regarding the convergence of the two-dimensional spectrum x_{m,n}hat is not limited in particular. If, for example, the difference between the two-dimensional spectrum x_{m,n}hat before updating and the two-dimensional spectrum x_{m,n}hat after the updating is equal to or smaller than a threshold, it can be determined that the two-dimensional spectrum x_{m,n}hat after the updating has converged. On the other hand, if the difference between the two-dimensional spectrum x_{m,n}hat before updating and the two-dimensional spectrum x_{m,n}hat after the updating is greater than the threshold, it can be determined that the two-dimensional spectrum x_{m,n}hat after the updating has not converged.

The display device 6 acquires the two-dimensional spectrum x_{m,n}hat after the updating from the radar signal processing device 5.

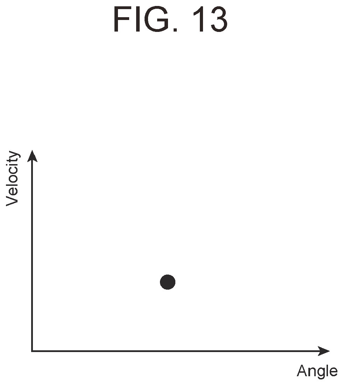

As illustrated in FIG. 13, the display device 6 causes an unillustrated display to display the two-dimensional spectrum x_{m,n}hat after the updating.

FIG. 13 is an explanatory diagram illustrating a display example of the two-dimensional spectrum x_{m,n}hat.

In FIG. 13, the horizontal axis represents the angle, and the vertical axis represents the velocity.

A grid point representing the direction in which the target is present and the velocity of the target is represented in black in the drawing.

In the first embodiment mentioned above, the radar signal processing device 5 includes: the reception signal acquisition unit 11 to acquire a reception signal of each of the plurality of reception antennas 3-1 to 3-N_{Rx}; the spectrum calculation unit 12 to calculate an initial value of a two-dimensional spectrum representing the direction in which a target is present and the velocity of the target on the basis of the reception signals acquired by the reception signal acquisition unit 11; and the spectrum update unit 13 to update the two-dimensional spectrum on the basis of non-linear components included in a velocity spectrum in the two-dimensional spectrum and positional errors of the reception antennas included in an angular spectrum in the two-dimensional spectrum. Accordingly, the radar signal processing device 5 can calculate not only the direction in which a target is present, but also the velocity of the target in a case where there is an unknown positional error in the installation position of the reception antenna 3-j.

### Second Embodiment.

In a radar signal processing device 5 explained in a second embodiment, a spectrum update unit 14 perform a process of updating a two-dimensional spectrum x_{m,n}hat using an optimal weight w_{m,n}⁽¹⁾hat for a first update count, perform a process of updating the two-dimensional spectrum x_{m,n}hat using an optimal weight w_{m,n}⁽²⁾hat for a second update count, and perform a process of updating the two-dimensional spectrum x_{m,n}hat using an optimal weight w_{m,n}⁽³⁾hat for a third update count.

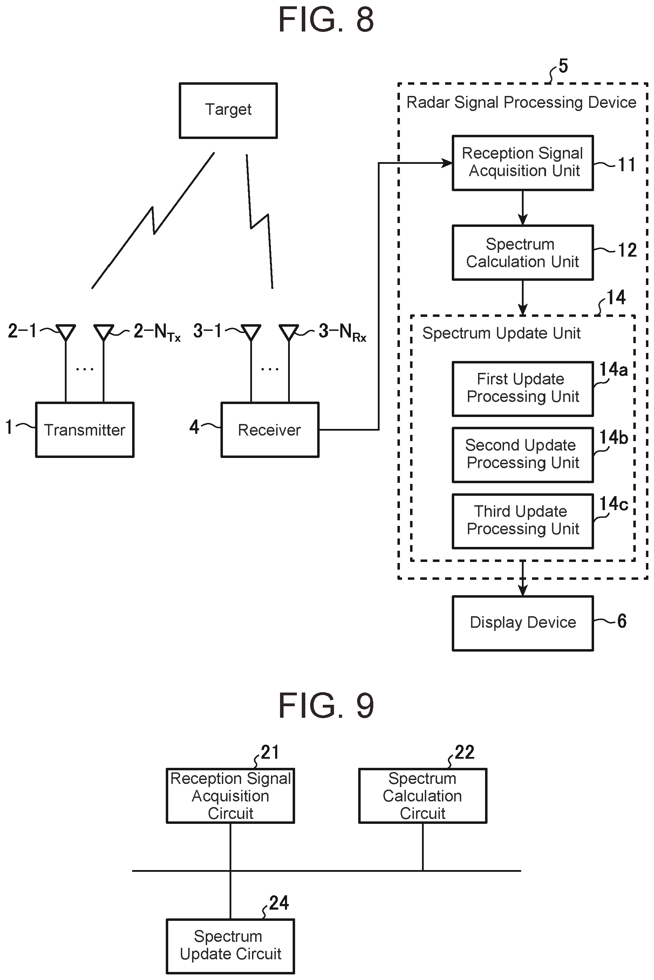

FIG. 8 is a configuration diagram illustrating a radar device including a radar signal processing device 5 according to the second embodiment. Reference signs in FIG. 8 that are identical to reference signs in FIG. 1 represent identical or equivalent portions. Accordingly, detailed explanations thereof are omitted.

FIG. 9 is a hardware configuration diagram illustrating the hardware of the radar signal processing device 5 according to the second embodiment. Reference signs in FIG. 9 that are identical to reference signs in FIG. 2 represent identical or equivalent portions. Accordingly detailed explanations thereof are omitted.

The radar signal processing device 5 illustrated in FIG. 8 includes a reception signal acquisition unit 11, a spectrum calculation unit 12, and the spectrum update unit 14.

For example, the spectrum update unit 14 is implemented by a spectrum update circuit 24 illustrated in FIG. 9.

The spectrum update unit 14 includes a first update processing unit 14a, a second update processing unit 14b, and a third update processing unit 14c.

The spectrum update unit 14 acquires an initial value of the two-dimensional spectrum from the spectrum calculation unit 12.

On the basis of non-linear components included in the velocity spectrum of the two-dimensional spectrum, the spectrum update unit 14 calculates the first update count, which is the number of times of the process of updating the two-dimensional spectrum based on the non-linear components.

The spectrum update unit 14 repeatedly performs the process of updating the two-dimensional spectrum based on the non-linear components for the first update count.

On the basis of positional errors of the reception antennas 3-1 to 3-N_{Rx}, the spectrum update unit 14 calculates the second update count, which is the number of times of the process of updating the two-dimensional spectrum based on the positional errors of the reception antennas 3-1 to 3-N_{Rx}.

The spectrum update unit 14 repeatedly perform the process of updating the two-dimensional spectrum based on the positional errors for the second update count.

On the basis of a coupling error, the spectrum update unit 14 calculates the third update count, which is the number of times of the process of updating the two-dimensional spectrum based on the coupling error.

The spectrum update unit 14 repeatedly perform the process of updating the two-dimensional spectrum based on the coupling error for the third update count.

After completing the process of updating the two-dimensional spectrum x_{m,n}hat, the spectrum update unit 14 outputs the two-dimensional spectrum x_{m,n}hat after the updating to a display device 6, for example.

The first update processing unit 14a acquires the initial value of the two-dimensional spectrum from the spectrum calculation unit 12.

The first update processing unit 14a calculates the first update count on the basis of the magnitude of a non-linear component attributable to the acceleration of a target and the magnitude of a non-linear component attributable to variations in transmission intervals of pulses.

The first update processing unit 14a repeatedly perform the process of updating the two-dimensional spectrum based on the non-linear components for the first update count.

The two-dimensional spectrum update process itself performed by the first update processing unit 14a is similar to the two-dimensional spectrum update process performed by the first update processing unit 13a illustrated in FIG. 1.

The first update processing unit 14a outputs the two-dimensional spectrum after the updating to the second update processing unit 14b.

The second update processing unit 14b acquires the two-dimensional spectrum after the updating from the first update processing unit 14a.

The second update processing unit 14b calculates the second update count on the basis of the positional errors of the reception antennas 3-1 to 3-N_{Rx} included in an angular spectrum.

The second update processing unit 14b repeatedly perform the process of updating the two-dimensional spectrum based on the positional errors for the second update count.

The two-dimensional spectrum update process itself performed by the second update processing unit 14b is similar to the two-dimensional spectrum update process performed by the second update processing unit 13b illustrated in FIG. 1.

The second update processing unit 14b outputs the two-dimensional spectrum after the updating to the third update processing unit 14c.

The third update processing unit 14c acquires the two-dimensional spectrum after the updating from the second update processing unit 14b.

The third update processing unit 14c calculates the third update count on the basis of the coupling error.

The third update processing unit 14c repeatedly perform the process of updating the two-dimensional spectrum based on the coupling error for the third update count.

The two-dimensional spectrum update process itself performed by the third update processing unit 14c is similar to the two-dimensional spectrum update process performed by the third update processing unit 13c illustrated in FIG. 1.

The third update processing unit 14c outputs the two-dimensional spectrum after the updating to the display device 6, for example.

It is assumed in FIG. 8 that each of the reception signal acquisition unit 11, the spectrum calculation unit 12, and the spectrum update unit 14, which are constituent elements of the radar signal processing device 5, is implemented by dedicated hardware illustrated in FIG. 9. That is, it is assumed that the radar signal processing device 5 is implemented by a reception signal acquisition circuit 21, a spectrum calculation circuit 22, and the spectrum update circuit 24.

For example, each of the reception signal acquisition circuit 21, the spectrum calculation circuit 22, and the spectrum update circuit 24 is a single circuit, a composite circuit, a programmed processor, a parallel-programmed processor, an ASIC, an FPGA, or a combination of these.

Constituent elements of the radar signal processing device 5 are not necessarily implemented by dedicated hardware, but the radar signal processing device 5 may be implemented by software, firmware, or a combination of software and firmware.

In a case where the radar signal processing device 5 is implemented by software, firmware, or the like, a program for causing the computer to execute a processing procedure of each of the reception signal acquisition unit 11, the spectrum calculation unit 12, and the spectrum update unit 14 is stored on the memory 31 illustrated in FIG. 3. Then, the processor 32 illustrated in FIG. 3 executes the programs stored on the memory 31.

In addition, FIG. 9 illustrates an example in which each of the constituent elements of the radar signal processing device 5 is implemented by dedicated hardware, and FIG. 3 illustrates an example in which the radar signal processing device 5 is implemented by software, firmware, or the like. However, this is merely an example. Some constituent elements of the radar signal processing device 5 may be implemented by dedicated hardware, and the remaining constituent elements may be implemented by software, firmware, or the like.

Next, an operation performed by the radar device illustrated in FIG. 8 is explained. It should be noted that ,except for the spectrum update unit 14, the radar signal processing device 5 is similar to the radar device illustrated in FIG. 1. Because of this, only an operation performed by the spectrum update unit 14 is explained here.

For example, as represented by the following Formula (44), the first update processing unit 14a calculates a first update count UPC₁ on the basis of the magnitude NC₁ of a non-linear component attributable to a line-of-sight-direction acceleration β of the target and the magnitude of a non-linear component NC₂ attributable to variations in transmission intervals of pulses.${UPC}_{1} = {PC}_{1} \times {NC}_{1} + {PC}_{2} \times {NC}_{2}$ (44)

In Formula (44), each of PC₁ and PC₂ is a constant of proportionality, and, for example, may be stored on an internal memory of the first update processing unit 14a or may be provided from the outside of the radar signal processing device 5.

For example, as represented by the following Formula (45) or Formula (46), the second update processing unit 14b calculates a second update count UPC₂ on the basis of a positional error Δdⱼ of a reception antenna 3-j (j = 1, ···, N_{Rx}) included in the angular spectrum.${UPC}_{2} = {PC}_{3} \times {\sum }_{j = 1}^{{N}_{Rx}} \left|Δ{d}_{j}\right|$ (45) ${UPC}_{2} = {PC}_{3} \times \frac{{\sum }_{j = 1}^{{N}_{Rx}} \left|Δ{d}_{j}\right|}{{N}_{Rx}}$ (46)

In Formulae (45) and (46), PC₃ is a constant of proportionality, and, for example, may be stored on an internal memory of the second update processing unit 14b or may be provided from the outside of the radar signal processing device 5.

For example, as represented by the following Formula (47), the third update processing unit 14c calculates a third update count UPC₃ on the basis of a coupling error CE.${UPC}_{3} = {PC}_{4} \times CE$ (47)

In Formula (47), PC₄ is a constant of proportionality, and, for example, may be stored on an internal memory of the third update processing unit 14c or may be provided from the outside of the radar signal processing device 5.

Each of the first update processing unit 14a, the second update processing unit 14b, and the third update processing unit 14c sequentially performs the process of updating the two-dimensional spectrum x_{m,n}hat similarly to the first update processing unit 13a, the second update processing unit 13b, and the third update processing unit 13c illustrated in FIG. 1.

It should be noted that, while the respective update process counts of the first update processing unit 13a, the second update processing unit 13b, and the third update processing unit 13c illustrated in FIG. 1 are the same count, the respective update process counts of the first update processing unit 14a, the second update processing unit 14b, and the third update processing unit 14c are mutually different.

That is, the first update processing unit 14a performs the process of updating the two-dimensional spectrum x_{m,n}hat based on the non-linear components for the first update count UPC₁.

The second update processing unit 14b performs the process of updating the two-dimensional spectrum x_{m,n}hat based on the positional error Δdⱼ for the second update count UPC₂.

The third update processing unit 14c performs the process of updating the two-dimensional spectrum x_{m,n}hat based on the coupling error CE for the third update count UPC₃.

In the second embodiment mentioned above, the spectrum update unit 14 calculates the first update count, which is the number of times of the process of updating a two-dimensional spectrum based on non-linear components included in a velocity spectrum on the basis of the non-linear components, calculates the second update count, which is the number of times of the process of updating the two-dimensional spectrum based on a positional error of the reception antenna 3-j (j = 1, ···, N_{Rx}) on the basis of the positional error of the reception antenna 3-j, and calculates the third update count, which is the number of times of the process of updating the two-dimensional spectrum based on a coupling error on the basis of the coupling error. Then, the radar signal processing device 5 illustrated in FIG. 8 is configured in such a manner that the spectrum update unit 14 repeatedly perform the process of updating the two-dimensional spectrum based on the non-linear components for the first update count, repeatedly perform the process of updating the two-dimensional spectrum based on the positional error of the reception antenna 3-j for the second update count, and repeatedly perform the process of updating the two-dimensional spectrum based on the coupling error for the third update count. Accordingly, similarly to the radar signal processing device 5 illustrated in FIG. 1, the radar signal processing device 5 illustrated in FIG. 8 can calculate not only the direction in which the target is present but also the velocity of the target, and can also optimize the number of times of the update processing,, in a case where there is an unknown positional error of the installation position of the reception antenna 3-j.

### Third Embodiment.

In the application examples of the radar signal processing device 5 in the first and second embodiments, as illustrated in FIG. 4, the vehicle on which the radar device is installed is traveling at a constant velocity, and the target vehicle is traveling with an unknown acceleration.

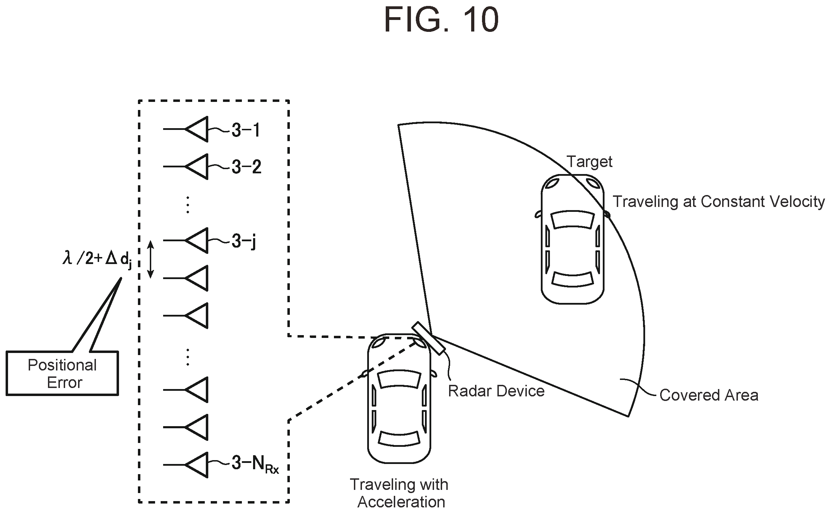

However, this is merely an example. In an application example of a radar signal processing device 5, as illustrated in FIG. 10, a vehicle on which a radar device is installed may be traveling with an acceleration, and a target vehicle may be traveling at a constant velocity.

In the example illustrated in FIG. 10, the N_{Rx} reception antennas 3-1 to 3-N_{Rx} are installed in a linear array at intervals of the wavelength λ/2, which is half the wavelength of a pulse which is a transmission signal. In the example illustrated in FIG. 10, the illustrations of transmission antennas 2-1 to 2-N_{Tx} are omitted.

In the example illustrated in FIG. 10, a positional error Δdⱼ which is an error of the installation position of a reception antenna 3-j (j = 1, ···, N_{Rx}) occurs randomly.

FIG. 10 is an explanatory diagram illustrating the relationship between the target and the vehicle on which the radar device is installed, and the positional error Δdⱼ of the reception antenna 3-j.

When an application example of the radar signal processing device 5 is an example illustrated in FIG. 10 also, similarly to the first and second embodiments, the radar signal processing device 5 can calculate a two-dimensional spectrum representing the direction in which the target is present and the velocity of the target in a case where there is an unknown positional error in the installation position of the reception antenna 3-j.

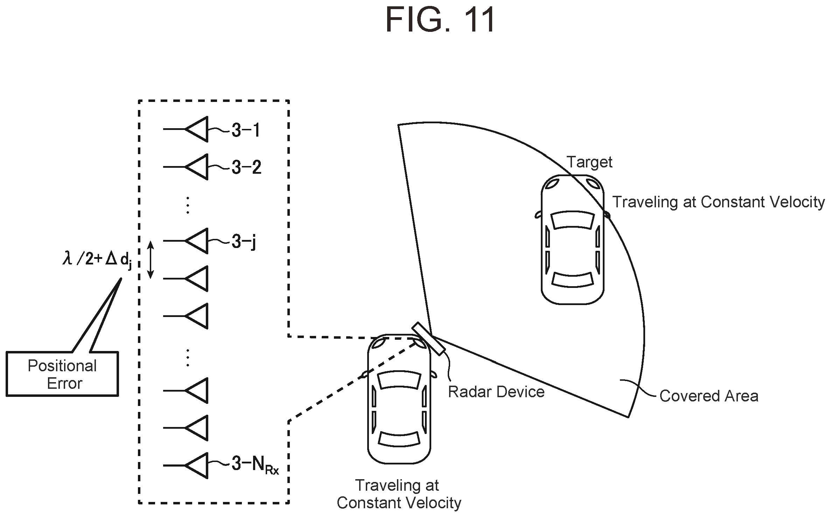

In addition, in an application example of the radar signal processing device 5, as illustrated in FIG. 11, both the vehicle on which the radar device is installed and the target vehicle may be traveling at constant velocities.

It should be noted that there are variations in transmission intervals of pulses transmitted from the transmission antennas 2-1 to 2-N_{Tx} in the example illustrated in FIG. 11.

FIG. 11 is an explanatory diagram illustrating the relationship between the target and the vehicle on which the radar device is installed, and the positional error Δdⱼ of the reception antenna 3-j.

When an application example of the radar signal processing device 5 is an example illustrated in FIG. 11 also, similarly to the first and second embodiments, the radar signal processing device 5 can calculate the two-dimensional spectrum representing the direction in which the target is present and the velocity of the target in a case where there is an unknown positional error in the installation position of the reception antenna 3-j.

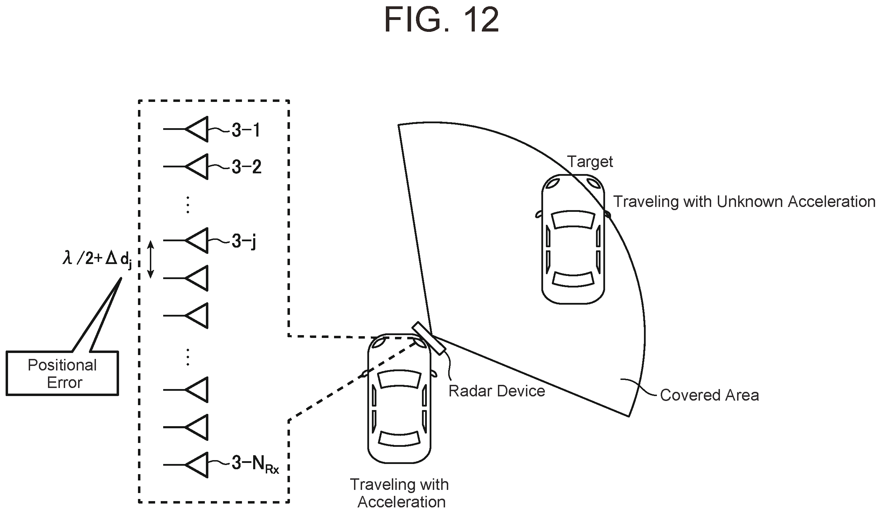

In addition, in an application example of a radar signal processing device 5, as illustrated in FIG. 12, the vehicle on which the radar device is installed may be traveling with an acceleration, and the target vehicle may be traveling with an unknown acceleration.

In the example illustrated in FIG. 12, the N_{Rx} reception antennas 3-1 to 3-N_{Rx} are installed in a linear array at intervals of the wavelength λ/2 which is half the wavelength of a pulse which is a transmission signal. In the example illustrated in FIG. 12, the illustrations of the transmission antennas 2-1 to 2-N_{Tx} are omitted.

In the example illustrated in FIG. 12, the positional error Δdⱼ which is an error of the installation position of the reception antenna 3-j (j = 1, ···, N_{Rx}) occurs randomly.

FIG. 12 is an explanatory diagram illustrating the relationship between the target and the vehicle on which the radar device is installed, and the positional error Δdⱼ of the reception antenna 3-j.

Even when an application example of the radar signal processing device 5 is an example illustrated in FIG. 12, similarly to the first and second embodiments, the radar signal processing device 5 can calculate the two-dimensional spectrum representing the direction in which the target is present and the velocity of the target in a case where there is an unknown positional error in the installation position of the reception antenna 3-j.

Note that the present disclosure allows for free combinations of each of the embodiments, modifications of any constituent elements in each of the embodiments, and omissions of any constituent elements in each of the embodiments.

### INDUSTRIAL APPLICABILITY

The present disclosure is suited for a radar signal processing device, a radar signal processing method, and a radar device.

### REFERENCE SIGNS LIST

1: Transmitter; 2-1 to 2-N_{Tx}: Transmission antenna; 3-1 to 3-N_{Rx}: Reception antenna; 4: Receiver; 5: Radar signal processing device; 6: Display device; 11: Reception signal acquisition unit; 12: Spectrum calculation unit; 13, 14: Spectrum update unit; 13a, 14a: First update processing unit; 13b, 14b: Second update processing unit; 13c, 14c: Third update processing unit; 21: Reception signal acquisition circuit; 22: Spectrum calculation circuit; 23: Spectrum update circuit; 31: Memory; 32: Processor

## Claims

1. A radar signal processing device comprising:
a reception signal acquisition unit to acquire a reception signal of each of a plurality of reception antennas;
a spectrum calculation unit to calculate an initial value of a two-dimensional spectrum representing a direction in which a target is present and a velocity of the target on a basis of the reception signals acquired by the reception signal acquisition unit; and
a spectrum update unit to update the two-dimensional spectrum on a basis of a non-linear component included in a velocity spectrum in the two-dimensional spectrum and a positional error of the reception antennas included in an angular spectrum in the two-dimensional spectrum.

2. The radar signal processing device according to claim 1, wherein
the spectrum update unit includes:
a first update processing unit to update the two-dimensional spectrum calculated by the spectrum calculation unit, on a basis of the non-linear component included in the velocity spectrum;
a second update processing unit to update the two-dimensional spectrum obtained after the updating by the first update processing unit, on a basis of the positional error of the reception antennas included in the angular spectrum; and
a third update processing unit to update the two-dimensional spectrum obtained after the updating by the second update processing unit, on a basis of a coupling error of the non-linear component and the positional error.

3. The radar signal processing device according to claim 2, wherein the first update processing unit updates the two-dimensional spectrum calculated by the spectrum calculation unit, on a basis of a non-linear component attributable to an acceleration of the target in the non-linear component included in the velocity spectrum.

4. The radar signal processing device according to claim 2, wherein the first update processing unit updates the two-dimensional spectrum calculated by the spectrum calculation unit, on a basis of a non-linear component attributable to variations in transmission intervals of pulses transmitted from a transmission antenna in the non-linear component included in the velocity spectrum.

5. The radar signal processing device according to claim 1, wherein the spectrum update unit repeatedly perform a process of updating the two-dimensional spectrum until the two-dimensional spectrum converges.

6. The radar signal processing device according to claim 1, wherein
the spectrum update unit
calculates a first update count which is a number of times of a process of updating the two-dimensional spectrum based on the non-linear component included in the velocity spectrum on a basis of the non-linear component, calculates a second update count which is a number of times of a process of updating the two-dimensional spectrum based on the positional error of the reception antenna on a basis of the positional error of the reception antenna, and calculates a third update count which is a number of times of a process of updating the two-dimensional spectrum based on a coupling error on the basis of the coupling error; and
repeatedly perform the process of updating the two-dimensional spectrum based on the non-linear component for the first update count, repeatedly perform the process of updating the two-dimensional spectrum based on the positional error of the reception antenna for the second update count, and repeatedly perform the process of updating the two-dimensional spectrum based on the coupling error for the third update count.

7. A radar signal processing method comprising:
acquiring, by a reception signal acquisition unit, a reception signal of each of a plurality of reception antennas;
calculating, by a spectrum calculation unit, an initial value of a two-dimensional spectrum representing a direction in which a target is present and a velocity of the target on a basis of the reception signals acquired by the reception signal acquisition unit; and
updating, by a spectrum update unit, the two-dimensional spectrum on a basis of a non-linear component included in a velocity spectrum in the two-dimensional spectrum and a positional error of the reception antennas included in an angular spectrum in the two-dimensional spectrum.

8. A radar device comprising:
a transmission antenna to emit a transmission signal toward a target;
a plurality of reception antennas to receive a reception signal which is a transmission signal after reflection by the target;
a reception signal acquisition unit to acquire the reception signal of each of the plurality of reception antennas;
a spectrum calculation unit to calculate an initial value of a two-dimensional spectrum representing a direction in which the target is present and a velocity of the target on a basis of the reception signals acquired by the reception signal acquisition unit; and
a spectrum update unit to update the two-dimensional spectrum on a basis of a non-linear component included in a velocity spectrum in the two-dimensional spectrum and a positional error of the reception antennas included in an angular spectrum in the two-dimensional spectrum.
